# EUROPEAN PATENT SPECIFICATION

(11) **EP 0 229 727 B1**
(45) Date of publication and mention of the grant of the patent: **07.01.1993**
(21) Application number: 87300354.5
(22) Date of filing: 16.01.1987
(51) Int. Cl.: B65H 21/00, G11B 23/20

(54) **An improved tape splicing machine**
Vorrichtung zum Verbinden von Bahnen
Dispositif pour raccorder des bandes

(30) Priority: 15.01.1986 GB 8600845
(43) Date of publication of application: 22.07.1987
(73) Proprietor: Sony Magnescale, Inc., Shinagawa-ku, Tokyo 141 (JP)
(72) Inventor: Gardner, John Phillip, Evesham Road Nr. Cheltenham Glos. (GB)
(74) Representative: Lawrence, Malcolm Graham

(56) References cited:
- GB-A- 2 091 438

## Description

The invention relates to tape splicing apparatus and use thereof, in particular for splicing print tapes and ribbons and magnetic tapes (such as audio and video tapes) preparative to loading of such tapes or ribbons into a cassette.

For commercial reasons audio and video cassettes are usually made with no more than a short length of leader tape wound onto the spools, and the magnetic tape is subsequently introduced by withdrawing a length of the leader tape, severing it, and joining one end to the magnetic tape to be introduced. The spool is then wound at high speed until the required amount of magnetic tape has been introduced into the cassette, and then the magnetic tape supply is again severed and the trailing end of the now-introduced magnetic tape is attached to the other portion of leader tape which has been retained for this purpose. Attempts are being made to reduce the lengths of leader tape in cassettes and this means that there is even less space available between the cassette and tape in order to effect splicing. Video tape is much wider than audio tape and cannot be displaced laterally of its length without the risk of buckles and creases which should be avoided in order not detrimentally to affect the reproducing qualities of the tape.

In UK Patent 2 091 438, this problem is addressed by providing a tape splicing mechanism in which a small portion of adhesive splicing tape is severed from a standing length and displaced by an applicator arm, parallel to the length of the splicing tape, to an application station within the loop of tape drawn from a cassette, without requiring the tape to be displaced from the plane defined by the two spools of the cassette. This mechanism adequately solves the problem of joining the magnetic tape to the leader tape within the loop and the present invention is a development from that earlier mechanism giving greater adaptability for a range of other operations. In particular, the present invention is directed at adapting the earlier known tape applicator which purpose the applicator arm must be advanced a different distance, and also to enable it to be used for joining typewriter or printer ribbon to leader tape of a cassette, for which purpose it is convenient for the applicator arm to be advanced different distances upon successive movements as will be described in more detail hereinafter.

It has become increasingly necessary to avoid the rotational inertia of a large spool of ribbon, for example, in high speed printers for computer and other printout. To overcome this problem, cassettes of ink ribbon have been devised in which, in place of spooling, the ribbon is merely stored in the cassette in zig-zag loops of random size. High speed printing, involving rapid and erratic withdrawal of the ribbon, can thus take place without involving the rotational kinetic energy of a spool. Introduction of ribbon into such a cassette is effected by manufacturing the cassette with a leader tape or ribbon to which the ink ribbon is subsequently attached by splicing.

According to one aspect of the invention, there is provided a tape splicing apparatus of a type comprising means for drawing a standing length of splicing tape from a source of supply thereof, means for severing a portion of splicing tape from the leading end of the said standing length, and displacement means for displacing the severed end portion, in a direction generally parallel to the said standing length, to an application position where it is to be applied to a tape to be spliced, characterised in that the apparatus is provided with stroke-defining means operable for defining first and second lengths of stroke of said displacement means whereby in carrying the severed end portion from the position at which it is severed from the standing length to the application position, the displacement means can selectively determine two different destinations for the severed end portion of said splicing tape.

The invention will now be described, by way of example only, reference being made to the accompanying drawings, in which:
Figure 1 is a schematic side view of the embodiment, illustrated with the carriage and applicator arm in the retracted position;
Figure 2 is a plan view from above of the mechanism illustrated in Figure 1, with the carriage and applicator arm being shown in an advanced position; and
Figure 3 is a schematic side view of the embodiment of Figure 1 with the carriage and applicator arm illustrated in a further advanced position.

Although the invention will be described hereinafter with particular reference to its application to a mechanism for splicing video or audio magnetic tape it will be appreciated that no loss of generality is engendered thereby and that the tape splicing mechanism of the present invention can be used to form splices in any tape-like material, including photographic film, typewriter and printer ribbon or other elongate strips.

The splicing mechanism shown in the drawings is supported on a back plate 11 from one face of which all the components of the splicer project. Extending parallel to the back plate 11 is a first guide rod 12 and a second guide rod 13 secured between a rear fixed block 14 and a forward fixed block 15 both of which are fixedly attached to the backplate 11. The rear fixed block 14 carries a bi-directional pneumatic cylinder 17 having a first inlet 18 for compressed air causing advancing movement of an actuator rod 19 of the actuator 17, and a second inlet 20 for compressed air causing retracting movement of the rod 19.

Slidably carried on the two guide rods 12, 13 is a carriage 21 which is fixedly attached to the actuator rod 19 for displacement along the guide rods 12, 13 in a forward and reverse direction (to the right and left respectively as viewed in the drawings). On the carriage 21 is mounted an applicator arm 22 pivotally connected thereto by a privotal connection 23 and biased in an anti-clockwise direction by a tension spring 24 acting between a peg 52 on the applicator arm 22 and a peg 51 on the carrige 21. The maximum rotational movement in an anti-clockwise direction which the applicator arm 22 can perform is limited by the adjustment of a cam 25 carried on the right hand fixed block 15. The lowermost face 26 of the latter is perforated with a plurality of holes in a grid pattern, which holes communicate via internal passages within the block 15 with a connector 27 adapted for connection to a vacuum source via suitable piping and control valves (not shown).

Also slidable on the guide rods 12, 13 and located between the carriage 21 and the fixed block 15 is a displaceable member in the form of a slide block 28. Such slide block 28 has an end face 29 which, like the fixed block 15, is provided with a plurality of apertures and internal passages, these latter communicating with a union 30 leading to a vacuum source via a control valve.

The slide block 28 further has an aperture 31 therein passing from its forward face 32, that is the face directed towards the fixed block 15, to its rear face 33, that is the face directed towards the carriage 21. A pneumatic actuator 50 is carried on the top of the slide block 28 and has an actuator arm carrying an abutment block 35 guided in a slot 36 extending transversely of and intersecting the transverse passage 31.

Aligned with the passage 31 of the slide block 28 is an abutment screw 37 threadedly engaged in the carriage 21. The carriage 21 also carries a screw threaded abutment stop 38 having an enlarged head 39 facing towards the slide block 28. A spring 45 interconnects the carriage 21 and the slide block 28 and exerts a biasing force on these tending to draw them together.

The right hand fixed block 15 also carries an adjustable abutment screw 48 the operative end of which faces rearwardly toward the slide block 28 to limit the advancing movement of the slide block 28 in a manner which will be described hereinbelow (the screw 48 thus serves as an end-of-travel screw). Carried on the lower part of the right hand fixed block 15 is a transversely moveable carriage 49 carrying a blade 34 which is displaceable transversely of the length of the applicator arm 22 through a recess 46 in the lower face of the applicator arm 22. An actuator (not shown) is provided for displacement of carriage 49. At the free end of the applicator arm 22 there is a vacuum face 47 which, like the faces 26 and 29 on the fixed block 15 and slide block 28 respectively, is provided with a plurality of apertures communicating with internal passages, these latter leading to a union 137 to which, in use, is attached a flexible pipe leading to a control valve and a vacuum source (not shown).

The back plate 11 further carries a spool spindle 40 on which is mounted a spool 41 of splicing tape 44 indicated in broken outline in the drawings. Splicing tape 44 from the spool 41 passes over a roller guide 42 on the left hand fixed block 14 and a standing length proceeds from the guide 42 past the slide block 28 to the fixed block 15.

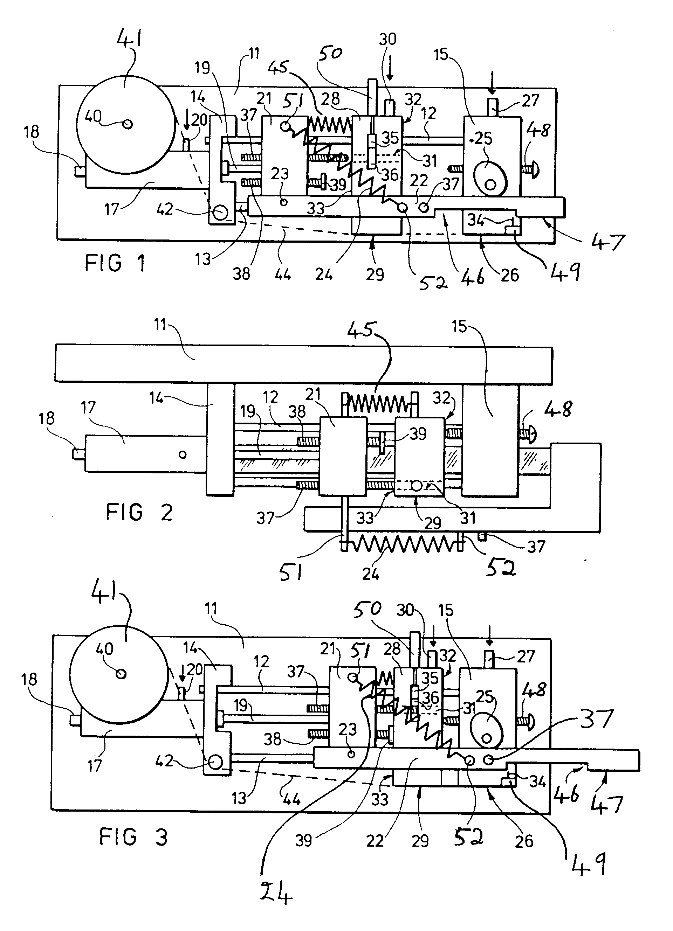

The operation of the mechanism described hereinabove is as follows. Assuming first that the carriage 21 and the applicator arm 22 borne thereon are in the retracted position with the rod 19 of the fluid pressure actuator 17 fully withdrawn, the vacuum face 47 of the applicator arm 22 will occupy the position illustrated in Figure 1. Vacuum is applied by the control means (not shown) to the vacuum face 47 of the applicator arm 22, to the vacuum face 26 of the right hand fixed block 15 and to the vacuum face 29 of the slide block 28. Splicing tape 44 extends from the spool 41 over the roller guide 42 and in contact with the just-mentioned vacuum faces 29, 26 and 47. Whilst in this position, the actuator associated with the transversely moveable slide block 49 is actuated to cause the blade 34 to move in contact with the tape 44 across its width thereby severing the forward end portion retained by the vacuum face 47 of the applicator arm 22 from the standing length of splicing tape between the vacuum face 26 of the fixed block 15 and the roller guide 42. The control valve linked to the union 27 is then closed to cut off communication between the vacuum face 26 and the vacuum source, the actuator 17 being connected to the source of compressed air so that the actuator rod 19 commences to extend. This displaces the carriage 21 towards the right as viewed in the drawings, carrying the actuator arm 22 with it. The severed end portion of the splicing tape carried on the vacuum face 47 of the arm 22 is thus displaced to the right, taking it towards an application position where it is pressed into contact with tape to be spliced by means of an actuator (not shown) acting to press down on the arm 22. The latter is thus caused to rotate in a clockwise direction (as viewed in Figure 1) against the bias of the spring 24. Rotation of the arm 22 does not interfere with the standing length of splicing tape 44 since, as will be seen from Figure 2, the vacuum face 47 on the arm 22 is actually offset laterally on a head portion of the arm 22 at the free end thereof so that the balance of the arm 22 is in turn laterally offset from the standing length of splicing tape 44.

Referring in more detail to the above-described operations, as the actuator rod 19 extends, moving the carriage 21, the screw abutment member 37 comes into contact with the block 35 in the slot 36 of slide block 28, causing the latter to displace with the carriage 21 until the slide block 28 comes into contact with the end-of-travel abutment screw 48. In this position, the standing length of tape 44 has been advanced by the slide block 28 by the fixed amount of travel of the slide block 28 between its initial position as shown in Figure 1 and the terminal position, illustrated in Figure 2, determined by the adjustment of the abutment screw 48. Tape 44 is carried on vacuum face 29 by the displacement of block 28 in this fashion. The leading end of tape 44 (from which a forward end portion has just been severed by operation of cutter blade 34 as described above) is displaced over vacuum face 26 to extend beyond this face.

Vacuum is then disconnected from vacuum face 29 of block 28 and re-applied to the vacuum face 26 of the fixed block 15 by operation of the control valves (not shown) which control the communication between the vacuum faces 26, 29 and the vacuum source. The pneumatic cylinder 17 is then caused to retract by applying compressed air to the union 20 to withdraw the arm 19 and cause the carriage 21 to move towards the left. A splice has, of course, been effected by this point by pressing the previously severed forward end portion of splicing tape carried by the vacuum face 47 on to the tape to be spliced, as described above. Following this, the vacuum face 47 is disconnected from the vacuum source by closure of an appropriate valve.

During the above-described return movement of the carriage 21, the slide block 28 is drawn to the left by the spring 45 and the standing length of tape 44 remains in position held by the vacuum face 26 on the fixed block 15. The leading end portion of the standing length of splicing tape 44 projects beyond the vacuum face 26, but because this is a relatively short length, the stiffness of the splicing tape is sufficient to prevent the free end from flexing downwardly to any significant extent.

When the actuator 17 is fully withdrawn and the carriage is in its left hand end position, the vacuum face 47 of the arm 22 is in register with the projecting free end portion of the splicing tape and the vacuum can be reapplied by means of the control valve. At this time, the vacuum is now connected to all three vacuum faces 26,29 and 47 and the blade 34 is again caused to sever the free end portion of the tape by advancing across it as previously described. Following retraction of the blade 34, the vacuum applied to the face 26 of the fixed block 15 is cut off by the control valve leaving the standing length of tape 44 retained by the vacuum face 29 of the slide block 28 and the now-severed free end portion of splicing tape retained by the vacuum face 47 at the end of the arm 22.

It is desired to displace this severed end portion of splicing tape further than the previous severed end portion had been displaced, the actuator 50 is connected to the compressed air source causing the abutment block 35 to be drawn upwardly in the slot 36. When the actuator 17 is now extended, the carriage 21 can move further to the right, eventually the slide block 28 being contacted by the enlarged head 39 of the abutment screw 38. During this movement, the abutment screw 37 which previously contacted the abutment 35 passes through the passage 31 freely without causing displacement of the slide block 28. Movement of block 28 upon its contact with head 39 of screw 38 continues until the slide block 28 again contacts the end of the abutment screw 48. The arm 22 has now been moved by a greater distance than before, whilst the slide block 28 has been displaced by the same distance between its two end positions. The arm 22 can again be depressed to effect application of the splicing tape onto the tape to be spliced, the vacuum being disconnected from the vacuum face 47 at the same time, and the mechanism is then ready for reverse movement back to the starting position as previously described.

As will be seen, the length of travel of the arm 22 can be rapidly changed between the preset positions determined by the screws 37 and 38 simply be energisation of the actuator cylinder 50. It will be appreciated, of course, that more than one such variation in stroke can be achieved by providing a number of such cylinders and a number of different screws such as the screw 37 in positions intermediate the screw 37 and the screw 38 so that, by suitable interception of a selected screw, the length of stroke of the carriage 21 before the slide block 28 comes into contact with the end-of-travel abutment screw 48 can be determined.

Because the severed end portion of the splicing tape 44 is moved parallel to its plane in being advanced from the point where it is severed from the standing length of splicing tape to the splicing station, it is possible to effect splices in close proximity to a tape cassette. This is significant because operating requirements then involve only a very limited length of leader tape to be drawn from the cassette in order to be able to effect splicing. Indeed, as far as video tape cassettes are concerned, the head end of the applicator arm 22 is sufficiently small to allow this to be introduced into the tape head gap within the cassette itself so that, if required, splicing can be undertaken actually within the cassette without requiring a length of leader tape to be withdrawn therefrom beforehand.

The apparatus of the present invention makes it possible to splice both ends of the leader tape rapidly by placing these side by side, laterally offset by approximately the width of the ribbon, and performing two splicing tape application movements of the arm 22 one with the actuator 50 energised and the other with the actuator 50 deenergised. Each alternate movement of the arm 22 thus carries the severed end portion of splicing tape further than the intermediate movements so the interconnection between the leader and the two ends of the print tape or ribbon to be introduced into the cassette can be rapidly performed.

Adjustment of the screw 48 determines the length of movement of the slide block 28 between its retracted and advanced position, and consequently the length of the displacement of the standing length of splicing tape 44 each time the applicator arm 22 is advanced. This accordingly determines the length of splicing tape 44 severed at each stroke of the blade 34. This adjustment enables the mechanism to be set up for different widths of tape to be spliced whilst adjustments to the screws 37 and 38 enable the distance by which the severed end portion of splicing tape is moved from the severing station to a tape application station to be set for two different positions.

## Claims

1. A tape splicing apparatus of a type comprising means (28, 29) for drawing a standing length of splicing tape (44) from a source of supply thereof, means (34) for severing a portion of splicing tape (44) from the leading end of the said standing length, and displacement means (14, 21, 22) for displacing the severed end portion, in a direction generally parallel to the said standing length, to an application position where it is to be applied to a tape to be spliced, characterised in that the apparatus is provided with stroke-defining means (34, 35, 47, 37, 38) operable for defining first and second lengths of stroke of said displacement means (14, 21, 22) whereby in carrying the severed end portion from the position at which it is severed from the standing length (44) to the application position, the displacement means (14, 21, 22) can selectively determine two different destinations for the severed end portion of said splicing tape (44).

2. A tape splicing apparatus according to Claim 1 characterised in that the said stroke-defining means (34, 35, 47, 37, 38) for determining the stroke of the said displacement means (14, 21, 22) includes a first stop member (37) continuously adjustable over a given range between first and second end positions thereof, and a cooperating abutment member (35) against which the first stop member contacts to determine the limit of the advancing stroke of the displacement means (14, 21, 22), either the said first stop member (37) or the abutment member (35) being movable laterally of the direction of relative movement between them between a first position in which their cooperating faces are aligned and a second position in which the cooperating faces are not aligned such that the length of stroke of the displacement means (14, 21, 22) is different according as the said laterally movable member (35) is in its first or its second position.

3. A tape splicing apparatus according to Claim 2 characterised in that the laterally movable member (35) has a plurality of contact faces longitudinally offset from one another selectively alignable with a contact face of the other member (37) whereby to determine a plurality of different end of stroke positions of the displacement means (14, 21, 22) in accordance with the position of the said movable member (35).

4. A tape splicing apparatus according to Claim 2 or Claim 3 characterised in that the said first stop member (37) is screw-threaded whereby continuous adjustment of the longitudinal position of the first stop member (37) with respect to a carriage (21) on which it is borne may be effected, the carriage (21) carrying an applicator arm (22) with vacuum retainer means (47) for the said cut off position of splicing tape.

5. A tape splicing apparatus according to Claim 4 characterised in that the carriage (21) bearing the first stop member (37) also carries an applicator arm (22) having selective retaining means (36) at an operative end thereof for retaining the severed end portion of the splicing tape (44) as it is displaced to the application position.

6. A tape splicing apparatus according to Claim 4 or Claim 5 characterised in that the said cooperating abutment member (35) is carried on a longitudinally displaceable member (28) having retaining means (29) for selectively retaining a part of the standing length of splicing tape (44) for causing advancement thereof as the displaceable member (28) is moved.

7. A tape splicing apparatus according to Claim 6 characterised in that the longitudinally displaceable member (28) is a slide block displaceable parallel to the direction of movement of the standing length of splicing tape (44) between advanced and retracted position, the length of stroke of the slide block (28) from its retracted to its advanced positions being determined by stroke adjustment means (31) borne on a fixed member (15) of the apparatus against which the slide block (28) contacts at the forward end of its stroke.

8. A tape splicing apparatus according to any one of Claims 5 to 7 characterised in that the said retaining mean comprise vacuum suction faces (26, 29) having openings communicating with a vacuum source via a control valve or respective control valve by means of which the vacuum retaining means can be selectively operated such that the standing length of tape is always advanced the same distance despite variation in advance of the severed end portion from the cut off position to the application position.

9. A tape splicing apparatus according to any one of Claims 4 to 8 characterised in that a fixed block (15) is provided with selective retaining means (26) in the form of a vacuum suction face (26) for retaining the leading end of the standing end of tape (44) during retractive movement of the longitudinally displaceable member constituted by the slide block (28) and the applicator arm (22) carried on the said carriage (21), during which movement the vacuum faces (36, 39) of the applicator arm (22) and the slide block (28) are disconnected from the vacuum source whilst the vacuum face (26) on the fixed block (15) is in communication with the vacuum source such that the standing length of tape (44) is held firmly thereby.

10. A tape splicing apparatus according to any preceding claim characterised in that the said laterally displaceable member (35) is the said cooperating abutment member (35) on the slide block (28), and there are provided fluid pressure actuator means for effecting displacement of the said laterally displaceable member (35) between its first and second positions.

11. Use of a tape splicing apparatus as claimed in any one of Claims 1 to 10 for splicing print tape or ribbon to a leader tape preparative to loading the print tape or ribbon into the cavity of a print tape or ribbon cassette.

12. Use of a tape splicing apparatus as claimed in any one of Claims 1 to 10 for splicing magnetic tape to leader tape preparative to loading the magnetic tape into the cavity of a magnetic tape cassette.

## Patentansprüche

1. Bandklebevorrichtung, die eine Vorrichtung (28, 29) enthalt, um eine stationäre Länge eines Klebebandes (44) von einer Quelle abzuziehen, eine Vorrichtung (34), um einen Bereich des Klebebandes (44) von einem führenden Ende der stationären Länge abzutrennen, und eine Versetzeinrichtung (14, 21, 22), die den abgetrennten Endbereich in einer im wesentlichen parallel zu der stationären Länge verlaufenden Richtung an einen Einsatzort versetzt, wo er an einem zu klebenden Band verwendet werden soll, dadurch gekennzeichnet, daß die Vorrichtung eine weitere Vorrichtung (34, 35, 47, 37, 38) zur Einstellung eines Hubs vorsieht, die auf erste und zweite Hubweiten der Versetzeinrichtung (14, 21, 22) einstellbar ist, wobei die Versetzeinrichtung (14, 21, 22) wahlweise zwei verschiedene Bestimmungsorte für den abgetrennten Endbereich des Klebebandes (44) bestimmen kann, während sie den abgetrennten Endbereich von der Stelle, an der er von der stationären Länge (44) abgetrennt wurde, zu dem Einsatzort überführt.

2. Bandklebevorrichtung nach Anspruch 1, dadurch gekennzeichnet, daß die Vorrichtung zur Einstellung des Hubs (34, 35, 47, 37, 38), die den Hub der Versetzeinrichtung (14, 21, 22) definiert, einen ersten Anschlag (37) enthält, der gleichmäßig über einen gegebenen Bereich zwischen den ersten und zweiten Einstellungen derselben angepaßt werden kann, und die ein kooperierendes Widerlager (35) enthalt, mit dem der erste Anschlag in Kontakt tritt, um die Begrenzung des vorrückenden Hubs der Versetzeinrichtung (14, 21, 22) zu bestimmen, wobei entweder der erste Anschlag (37) oder das Widerlager (35) seitlich zu der Richtung der relativen Bewegung zwischen ihnen und zwischen einer ersten Position, in der ihre kooperierenden Flächen axial ausgerichtet sind und einer zweiten Position, in der ihre kooperierenden Flächen nicht axial ausgerichtet sind, beweglich sind, so daß die Hubweite der Versetzeinrichtung (14, 21, 22) unterschiedlich ist, je nachdem, ob sich das seitlich bewegliche Teil (35) in seiner ersten oder zweiten Position befindet.

3. Bandklebevorrichtung nach Anspruch 2, dadurch gekennzeichnet, daß das seitlich bewegliche Teil (35) eine Vielzahl von Berührungsflächen aufweist, die längs gegeneinander versetzt sind, und die wahlweise axial mit der Berührungsfläche des anderen Teils (37) ausrichtbar sind, wodurch eine Vielzahl von verschiedenen Hubweiten der Versetzeinrichtung (14, 21, 22) bestimmt wird je nach Position des beweglichen Teils (35).

4. Bandklebevorrichtung nach Anspruch 2 oder 3, dadurch gekennzeichnet, daß der erste Anschlag (37) ein Gewinde aufweist, wodurch eine gleichmäßige Angleichung der Längsposition des Anschlags (37) in Bezug auf einen Träger (21) bewirkt wird, auf dem er befördert wird, wobei der Träger (21) einen Applizierarm (22) trägt, der eine Vakuumvorrichtung (47) aufweist, um die abgeschnittene Stelle Klebeband festzuhalten.

5. Bandklebevorrichtung nach Anspruch 4, dadurch gekennzeichnet, daß der Träger (21), der einen ersten Anschlag (37) trägt, außerdem einen Applizierarm (22) trägt, der eine Vorrichtung zur wahlweisen Zurückhaltung (36) an seinem Betätigungsende aufweist, um den abgetrennten Endbereich des Klebebandes (44) festzuhalten, wenn er an den Einsatzort versetzt wird.

6. Bandklebevorrichtung nach Anspruch 4 oder 5, dadurch gekennzeichnet, daß das kooperierende Widerlager (35) auf einem längs versetzbaren Teil (28) befördert wird, das eine Vorrichtung (29) zur Zurückhaltung aufweist, um wahlweise einen Teil der stationären Länge des Klebebandes (44) festzuhalten, um ein Vorrücken desselben zu bewirken, wenn die Versetzeinrichtung (28) bewegt wird.

7. Bandklebevorrichtung nach Anspruch 6, dadurch gekennzeichnet, daß das längs versetzbare Teil (28) ein Schlitten ist, der parallel zu der Richtung der Bewegung der stationären Länge des Klebebandes (44) zwischen vorgerückter und zurückgezogener Position beweglich ist, wobei die Hubweite des Schlittens (28) von seiner zurückgezogenen zu seiner vorgerückten Position durch eine Vorrichtung zur Hubbestimmung (31) bestimmt wird, die auf einem festen Teil (15) der Bandklebevorrichtung befördert wird, mit dem der Schlitten (28) am vorderen Ende seines Hubs in Kontakt tritt.

8. Bandklebevorrichtung nach einem oder mehreren der vorhergehenden Ansprüche 5 - 7, dadurch gekennzeichnet, daß die Vorrichtung zur Zurückhaltung Vakuumsaugrohre (26, 29) enthält, die Öffnungen aufweisen, die mit einer Vakuumquelle über ein Steuerventil oder ein entsprechendes Steuerventil in Verbindung stehen, durch das die Vakuumvorrichtung zur Zurückhaltung wahlweise bedienbar ist, so daß die stationäre Bandlänge immer mit derselben Länge vorgerückt ist, trotz der unterschiedlichen Länge der Versetzung des abgetrennten Endbereichs von der Abtrennstelle zum Einsatzort.

9. Banklebevorrichtung nach einem der Ansprüche 4 - 8, dadurch gekennzeichnet, daß ein fester Block (15) mit einer Vorrichtung (26) zur wahlweisen Zurückhaltung in Form einer Vakuumsaugfläche (26) vorgesehen ist, um das führende Ende des stationären Endes des Bandes (44) während der Rückzugsbewegung des längs versetzbaren Teils festzuhalten, die durch den Schlitten (28) und den Applizierarm (21), der auf dem Träger (21) getragen wird, ausgeführt wird, wobei während dieser Bewegung die Vakuumflächen (36, 39) des Applizierarms (22) und des Schlittens (28) von der Vakuumquelle getrennt sind, während die Vakuumfläche (26) auf dem festen Block (15) in Verbindung mit der Vakuumquelle steht, so daß die stationäre Länge des Bandes (44) hierdurch festgehalten wird.

10. Bandklebevorrichtung nach einem oder mehreren der vorhergehenden Ansprüche, dadurch gekennzeichnet, daß das seitlich versetzbare Teil (35) das kooperierende Widerlager (35) auf dem Schlitten (28) ist, und daß ein Stellglied für den Flüssigkeitsdruck vorgesehen ist, um eine Versetzung des seitlich versetzbaren Teils (35) zwischen seinen ersten und zweiten Positionen zu bewirken.

11. Verwendung einer Bandklebevorrichtung nach einem oder mehreren der Ansprüche 1- 10, um ein Druckband oder Farbband an ein Führungsband zu kleben, um das Laden des Druck- oder Farbbandes in den Aufnahmeraum einer Druck- oder Farbbandkassette vorzubereiten.

12. Verwendung einer Bandklebevorrichtung nach einem oder mehreren der Ansprüche 1 - 10, um Magnetband an ein Führungsband zu kleben, um das Laden des Magnetbandes in den Aufnahmeraum einer Magnetbandkassette vorzubereiten.

## Revendications

1. Appareil pour raccorder des bandes d'un type comprenant un moyen (28, 29) pour tirer une longueur fixe de bande de raccordement (44) d'une réserve de bandes, un moyen (34) pour sectionner un morceau de la bande de raccordement (44) à l'extrémité avant de ladite longueur fixe, et un moyen de déplacement (14, 21, 22) pour déplacer le morceau extréme selectionné dans une direction généralement parallèle à ladite longueur fixe, jusqu'à une position d'application dans laquelle il doit être appliqué sur une bande à raccorder, caractérisé en ce que l'appareil est équipé d'un moyen définissant une course (34, 35, 47, 37, 38) ayant pour fonction de définir une première et une seconde longueurs de course pour ledit moyen de déplacement (14, 21, 22) de façon à transporter le morceau extréme selectionné depuis la position dans laquelle il a été sectionné dans la bande fixe (44) juaqu'à la position d'application, le moyen de déplacement (14, 21, 22) pouvant déterminer sélectivement deux positions diffférentes du morceau extréme de ladite bande de raccordement (44) qui a été sectionnée.

2. Appareil pour raccorder des bandes selon la revendication 1, caractérisé en ce que ledit moyen de définition d'une course (34, 35, 47, 37, 38) destiné à définir la course dudit moyen de déplacement (14, 21, 22) comprend un premier élément de butée (37) réglable en continu dans une plage donnée entre une première et une seconde positions extrêmes, et un moyen de butée (35) associé, contre lequel le premier élément de butée vient en contact pour définir la limite de la course d'avance du moyen de déplacement (14, 21, 22), l'un ou l'autre desdits premier moyen de butée (37) et l'élément de butée (35) étant mobile latéralement à la direction des mouvements relatifs entre eux entre une première position dans laquelle leurs faces coopérantes sont alignées, et une seconde position dans laquelle las faces coopérantes ne sont pas alignées afin que la longueur de la course du moyen de déplacement (14, 21, 22) soit différente selon que ledit élément mobile latéralement (35) se trouve dans sa premiére ou dans sa seconde position.

3. Appareil pour raccorder des bandes selon la revendication 2, caractérisé en ce que l'élément mobile latéralement (35) possède plusieurs faces de contact décalées longitudinalement l'une de l'autre, et pouvant être alignées de manière sélective avec une face de contact de l'autre élément (37) de façon à définir plusieurs positions différentes de fin de course du moyen de déplacement (14, 21, 22) en fonction de la position dudit élément mobile (35).

4. Appareil pour raccorder des bandes selon la revendication 2 ou 3, caractérisé en ce que ledit premier élément de butée (37) porte un filet de vis de façon à pouvoir ajuster en continu la position longitudinale du premier élément de butée (37) par rapport à un chariot (21) sur lequel il est supporté, le chariot (21) portant un bras applicateur (22) avec un moyen de retenue par aspiration (47) pour ladite position de coupure de la bande de raccordement.

5. Appareil pour raccorder des bandes selon la revendication 4, caractérisé en ce que le chariot (21) portant le premier élément de butée (37) porte aussi un bras applicateur (22) ayant un moyen sélectif de retenue (36) à son extrémité fonctionnelle pour retenir la portion sectionnée à l'extrémité de la bande de raccordement (44) pendant son déplacement jusqu'à la position d'application.

6. Appareil pour raccorder des bandes selon la revendication 4 ou 5, caractérisé en ce que ledit élément de butée coopérant (35) est supporté par élément mobile longitudinalement (28) ayant un moyen de retenue (29) pour retenir sélectivement une partie de la longueur fixe de la bande de raccordement (44) afin de la faire avancer quand l'élément mobile (28) est déplacé.

7. Appareil pour raccorder des bandes selon la revendication 6, caractérisé en ce que l'élément mobile longitudinalement (28) est un bloc coulissant mobile dans une direction parallèle au mouvement de la longueur fixe de bande de raccordement (44) entre une position avancée et une position de retrait, la longueur de la course du bloc coulissant (28) de sa position en retrait à sa position avancée étant définie par le moyen de réglage de course (31) supporté par un élément fixe (15) de l'appareil contre lequel le bloc coulissant (28) vient en contact à l'extrémité avant de sa course.

8. Appareil pour raccorder des bandes selon l'une quelconque des revendications 5 à 7, caractérisé en ce que ledit moyen de retenue comprend des faces d'aspiration (26, 29) ayant des ouvertures en communication avec une source de vide par l'intermédiaire d'une vanne de commande ou d'une vanne respective de commande grâce à laquelle le moyen de retenue par aspiration peut être manoeuvré de manière sélective de façon que la longueur fixe de bande soit toujours avancée de la même distance indépendamment de la variation de l'avance de la partie d'extrémité découpée par rapport à la position de découpe jusqu'à la position d'application.

9. Appareil pour raccorder des bandes selon l'une quelconque des revendications 4 à 8, caractérisé en ce qu'un bloc fixe (15) est pourvu d'un moyen sélectif de retenue (26) en forme de face d'aspiration (26) pour retenir l'extrémité avant de la bande de l'extrémité de la bande fixe (44) pendant le mouvement de retrait de l'élément mobile longitudinalement constitué par le bloc coulissant (28) et le bras applicateur (22) supporté par ledit chariot (21), mouvement au cours duquel les faces d'aspiration (36, 39) du bras applicateur (22) et du bloc coulissant (28) ne sont plus reliées à la source de vide tandis que la face d'aspiration (26) du bloc fixe (15) est en communication avec la source de vide, de sorte que la longueur fixe de bande (44) soit ainsi maintenue solidement.

10. Appareil pour raccorder des bandes selon l'une quelconque des revendications précédentes, caractérisé en ce que ledit élément mobile latéralement (35) est constitué par ledit élément de butée coopérant (35) monté sur la bloc coulissant (28) et en ce qu'il est prévu un moyen actionneur à fluide sous pression pour effectuer le déplacement dudit élément mobile latéralement (35) entre sa première et sa deuxième positions.

11. Emploi d'un appareil à raccorder les bandes selon l'une quelconque des revendications 1 à 10 pour raccorder une bande ou un ruban d'impression à une amorce de bande en préparation au chargement de la bande ou du ruban d'impression dans la cavité d'une cassette de bande ou de ruban d'impression.

12. Emploi d'un appareil à raccorder des bandes selon l'une quelconque des revendications 1 à 10, pour raccorder une bande magnétique à une amorce de bande en préparation au chargement de la bande magnétique dans la cavité d'une cassette à bande magnétique.
